(19) Europäisches Patentamt
European Patent Office
Office européen des brevets

(11) **EP 0 821 021 B1**

(12) **EUROPÄISCHE PATENTSCHRIFT**

(45) Veröffentlichungstag und Bekanntmachung des Hinweises auf die Patenterteilung:
**12.11.2003 Patentblatt 2003/46**

(51) Int Cl.[7]: **C08G 59/50**, C08G 59/18, C09D 163/00

(21) Anmeldenummer: **97112493.8**

(22) Anmeldetag: **22.07.1997**

(54) **Härter für wasserverdünnbare Epoxiharzsystem mit Topzeit-Anzeige**

Curing agent for water-dilutable epoxy resin systems indicating end of pot-life

Agent de durcissement pour systèmes diluables par de l'eau à base de résines époxydes indiquant la fin de vie en pot

(84) Benannte Vertragsstaaten:
**BE CH DE FI FR GB IT LI NL SE**

(30) Priorität: **26.07.1996 DE 19630277**

(43) Veröffentlichungstag der Anmeldung:
**28.01.1998 Patentblatt 1998/05**

(73) Patentinhaber: **Surface Specialties Germany GmbH & Co. KG**
**65203 Wiesbaden (DE)**

(72) Erfinder:
• **Neumann, Uwe, Dr.**
**Mobile, Alabama 36625 (US)**
• **Gerlitz, Martin, Dr.**
**8055 Graz (AT)**

(74) Vertreter: **Deckers, Hellmuth, Dr.**
**Patentanwaltskanzlei Zounek,**
**Industriepark Kalle-Albert,**
**Rheingaustrasse 190-196**
**65174 Wiesbaden (DE)**

(56) Entgegenhaltungen:
**EP-A- 0 000 605       EP-A- 0 610 787**
**EP-A- 0 765 921**

**Beschreibung**

Wasserverdünnbare Epoxidharzsysteme haben zunehmend unter den kalthärtenden "Wasserlakken" an Bedeutung gewonnen. Diese 2K-Systeme weisen hervorragende Eigenschaften auf im Vergleich zu 1K-Wasserlacken. Hervorzuheben sind folgende positive Eigenschaften: Kein oder nur geringer Lösemittelanteil, nicht feuergefährlich, keine oder nur geringe Geruchsbelästigung, leichte Verarbeitbarkeit, geringe Empfindlichkeit gegenüber feuchten Untergründen, gute Trocknung und schnelle Durchhärtung, exzellente Haftung auf den meisten Substraten, sehr gute Zwischenschichthaftung, guter Korrosionsschutz bei Metallen und leichte Reinigung der Arbeitsgeräte direkt nach Gebrauch.

Diese Erfindung betrifft neue Härtungsmittel für Epoxidharze, die bevorzugt zur Herstellung wäßriger Epoxidharz-Härter-Emulsionen oder auch -Dispersionen Verwendung finden. Diese Härtungsmittel zeichnen sich dadurch aus, daß sie das Ende der Verarbeitungszeit durch einen Anstieg der Viskosität erkennen lassen.

Aus der EP-B 0 000 605 sind Härtungsmittel für wäßrige Epoxidharz-Dispersionen bekannt, die durch Umsetzung von Additionsprodukten aus Polyalkylenpolyäther-Polyolen und wasserunlöslichen Polyepoxidverbindungen mit Polyaminen hergestellt werden, wobei an die reaktiven Gruppen der Polyamine noch zur Addition befähigte, ungesättigte Verbindungen addiert sind.

In der EP-B 0 387 418 wird versucht, die schwierige Synthese eines polyäthermodifizierten Harzvorproduktes zu vereinfachen, indem von aminoterminierten Polyätherglykolen ausgegangen wird. Das Vorprodukt wird in einer zweiten Stufe - völlig analog zu EP-B 0 000 605 - mit einem Überschuß an Polyaminen zu Addukten umgesetzt.

In der EP-A 0 567 831 werden wäßrige Härtungsmittel beschrieben, bestehend aus einem Emulgator, der hergestellt wird aus einem aminoterminierten Polyalkylenpolyäther, einem aliphatischen Diglycidyläther und einem Fettamin, einem Coemulgator, hergestellt aus einem Polyamin, einem aliphatischen Diglycidyläther und einem Fettamin, sowie einem Bis-amin-addukt aus Epoxidharz und einem Polyamin.

Diese Härtungsmittel weisen den wesentlichen Mangel auf, daß sie in Kombination mit den meisten handelsüblichen Epoxidharzen, wasseremulgierbaren Epoxidharzen oder auch Epoxid-Festharz-Dispersionen das Ende der Verarbeitungszeit nicht anzeigen. Der Anwender ist jedoch von den konventionellen, d.h. Flüssig- und Festharz-Systemen, die lösungsmittelfrei oder lösungsmittelhaltig sein können, her gewohnt, daß nach Abmischen des Zweikomponentensystems eine deutliche Viskositätserhöhung gegen Ende der Verarbeitungszeit auftritt, also die sogenannte Topfzeit ("pot life") deutlich sichtbar angezeigt wird. Dadurch wird vermieden, daß das schon abreagierte System appliziert wird.

Bei wäßrigen Epoxid-Systemen gelingt es ausschließlich bei Flüssigharzen in Kombination mit einigen wenigen wäßrigen Härtern, z.B. ®Epilink DP 660 von Akzo, einen Viskositätsanstieg zu beobachten, welcher rechtzeitig vor Ende der Gebrauchsdauer auftritt.

Mit Epoxid-Festharz-Dispersionen ist es bisher sogar überhaupt nicht gelungen, das Ende der Verarbeitungszeit anzuzeigen. Aufgrund der hervorragenden Eignung dieser Dispersionen für kalthärtende Zweikomponentensysteme, wie sie z.B. im Patent DE-C 36 43 751 und in der Anmeldung DE-A 41 28 487 beschrieben sind, ist auch hier die fehlende Topfzeit-Anzeige als Mangel zu sehen.

wäre es daher, wäßrige Härtungsmittel zur Verfügung zu stellen, welche unabhängig vom verwendeten Epoxidharz das Ende der Verarbeitungszeit anzeigen.

Überraschenderweise wird diese Aufgabe sowohl für wasserverdünnbare Epoxidflüssigharze als auch für Epoxidfestharz-Dispersionen gelöst, wenn Epoxid-Polyol-Addukte gemäß der Anmeldung EP-A 0 618 245 (US-A 5,459,180) oder der DE-A 195 36 608 als Zwischenprodukt verwendet werden.

Es ist daher Aufgabe der vorliegenden Erfindung, wasserdispergierbare Härtungsmittel für Epoxidharze zur Verfügung zu stellen, die neben der selbstverständlich guten Emulgierwirkung auf flüssige Epoxidharze und der Verträglichkeit mit Epoxid-Festharz-Dispersionen, in Kombination mit Epoxidharzen einen deutlichen Anstieg der Viskosität am Ende der Verarbeitungszeit zeigen.

Gegenstand der Erfindung sind daher wasserdispergierbare Härtungsmittel für Epoxidharze, enthaltend Umsetzungsprodukte (ABC) von Addukten (AB) aus

(A) zwei oder mehreren Polyäthylenglykolen mit einer gewichtsmittleren molaren Masse $M_W$ von 200 bis 20.000 g/mol und

(B) mindestens einer Epoxidverbindung mit mindestens zwei Epoxidgruppen pro Molekül und einem spezifischen Epoxidgruppen-Gehalt von 500 bis 10 000 mmol/kg (einem "Epoxidäquivalentgewicht" von 100 bis 2.000 g/mol), mit

(C) Polyaminen mit mindestens drei Aminwasserstoffatomen und mindestens einer primären Aminogruppe pro Molekül, mit gegebenenfalls anschließender chemischer Modifizierung der Umsetzungsprodukte (ABC),

wobei die Komponente (AB) in der ersten Ausführungsform eine Mischung enthält von

(i) Addukten (A2B) von Epoxidverbindungen (B) mit Polyäthylengylkolen (A2) mit einer gewichtsmittleren molaren Masse $M_w$ des Polyols von mindestens 4.000 g/mol und Addukten (A1B) von Epoxidverbindungen (B) mit Polyäthylengylkolen (A1) mit einer gewichtsmittleren molaren Masse $M_w$ des Polyäthylengylkols von 500 bis 2500 g/mol. Die Addukte (A2B) sind in einem Massenanteil von 10 und 75 %, bezogen auf die Masse der Mischung, in dieser enthalten, und die Addukte (A1B) sind in einem Massenanteil von 25 bis 90 %, bezogen auf die Masse der Mischung, in dieser enthalten.

In der zweiten Ausführungsform enthält die Komponente (AB)

(ii) Addukte einer Mischung (A) von Polyäthylengylkolen (A2) mit einer gewichtsmittleren molaren Masse $M_w$ von mindestens 4000 g/mol und Polyäthylengylkolen (A1) mit einer gewichtsmittleren molaren Masse $M_w$ von 500 bis 2500 g/mol mit Epoxidverbindungen (B), wobei die Polyäthylengylkole (A2) in einem Massenanteil von 15 bis 80 %, und die Polyäthylengylkole A1 in einem Massenanteil von 20 bis 85 %, bezogen auf die Masse der Mischung, in dieser enthalten sind.

Es ist im Rahmen der Erfindung auch möglich, beide Ausführungsformen miteinander zu kombinieren, also beispielsweise in der Ausführungsform (ii) als Komponente (A2) eine Mischung verschiedener Polyäthylengylkole einzusetzen, die so ausgewählt sind, daß die gewichtsmittlere molare Masse $M_w$ jeder Komponente der Mischung mindestens 4000 g/mol beträgt.

Bei der Synthese der Addukte (AB) bzw. (A1B) und (A2B) beträgt das Verhältnis der Anzahl der Hydroxylgruppen der Komponente (A) bzw. (A1) und (A2) zur Anzahl der Epoxid-Gruppen der Komponente (B) jeweils 1: 3 bis 1 : 10, vorzugsweise 1 : 3,5 bis 1: 9, besonders bevorzugt 1 : 4 bis 1 8, und das Verhältnis der Anzahl der verbleibenden Epoxidgruppen in den Epoxid-Polyäthylengylkol-Addukten (AB) zur Anzahl der Amin-Wasserstoffatome in den Polyaminen (C) beträgt 1 : 1,5 bis 1 : 100, vorzugsweise 1: 2 bis 1 : 20.

Die Polyäthylengylkole (A) haben vorzugsweise eine gewichtsmittlere molare Masse $M_w$ (Gelpermeationschromatographie; Polystyrolstandard), gemittelt über alle eingesetzten Polyäthylengylkole bzw. in der Mischung von bevorzugt zwischen 200 und 20.000, insbesondere 1.000 bis 10.000 g/mol und OH-Zahlen zweckmäßigerweise von 5 bis 600, bevorzugt 10 bis 100 mg/g. (Die OH-Zahl (gemessen in mg/g) ist das Verhältnis derjenigen Masse an Kaliumhydroxid $m_{KOH}$ in mg, die ebensoviele Hydroxylgruppen aufweist wie eine Masse $m_B$ der zu charakterisierenden Substanz, zu der Masse $m_B$ dieser Substanz in g.) Bevorzugt werden Polyäthylengylkole mit vorzugsweise nur endständigen OH-Gruppen. Es werden mindestens zwei Polyoxyäthylenglykole eingesetzt, wobei eines der beiden (A1) eine gewichtsmittlere molare Masse von 500 bis 2500, bevorzugt von 700 bis 2500 g/mol, und das andere (A2) eine gewichtsmittlere molare Masse von mindestens 4000, bevorzugt 4000 bis 20 000, besonders bevorzugt von 5000 bis 10 000 g/mol aufweist.

Die geeigneten **Epoxidverbindungen (B)** werden ausführlich in dem US-Patent US-A 5,495,180 (EP-A 0 618 245) beschrieben. Die Synthese der Epoxid-Polyäthylengylkol-Addukte aus (A) und (B) und die dabei verwendeten Katalysatoren werden ebenfalls ausführlich dort beschrieben.

Die Epoxidverbindungen entsprechend (B) besitzen vorzugsweise einen spezifischen Epoxidgruppen-Gehalt von 500 bis 10 000 mmol/kg (Epoxidäquivalentgewicht von 100 bis 2000 g/mol). Es handelt sich bevorzugt um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein und auch Hydroxylgruppen aufweisen. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten, Äthergruppierungen und ähnliche.

Vorzugsweise handelt es sich bei diesen Epoxidverbindungen um Polyglycidyläther auf Basis von mehrwertigen, vorzugsweise zweiwertigen Alkoholen mit 4 bis 10 Kohlenstoffatomen, Polyoxyalkylenglykolen mit 4 bis 80 Kohlenstoffatomen, mehrwertigen, bevorzugt zweiwertigen Phenolen mit 6 bis 20 Kohlenstoffatomen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die spezifischen Epoxidgruppen-Gehalte dieser Epoxidverbindungen liegen besonders bevorzugt zwischen 1000 und 9000 mmol/kg, insbesondere zwischen 2800 und 8000 mmol/kg (Epoxidäquivalentgewichte von 110 und 1000, insbesondere zwischen 125 und 350 g/mol).

Als mehrwertige Phenole sind beispielsweise zu nennen:, Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, 1,1-Bis-(4'-hydroxyphenyl)äthan, 2,2-Bis[4-(2'-Hydroxypropoxy)phenyl]-propan, 1,1-Bis-(4-hydroxyphenyl)-isobutan, 2,2-Bis-(4-hydroxy-3-tert.-butylphenyl)-propan, Bis-(2-hydroxynaphthyl)-methan, 1,5-Dihydroxynaphthalin, Tris-(4-hydroxyphenyl)-methan, Bis-(4-hydroxyphenyl)äther, Bis-(4-hydroxyphenyl)sulfon u. a. sowie die Halogenierungs- und Hydrierungsprodukte der vorstehend genannten Verbindungen. Bisphenol A ist hierbei besonders bevorzugt.

Beispiele für mehrwertige Alkohole als Basis für die entsprechenden Polyglycidyläther sind Äthylenglykol, Diäthylenglykol, Triäthylenglykol, Polyäthylenglykole (Polymerisationsgrad n = 1 bis 35), 1,2-Propylenglykol, Polypropylenglykole (n= 1 bis 15), 1,3-Propylenglykol, 1,4-Butandiol, 1,5-Pentandiol, 1,6-Hexandiol, 1,2,6-Hexantriol, Glycerin, Neopentylglykol, Trimethyloläthan und Trimethylolpropan. Polypropylenglykole (n = bis 10) sind hierbei besonders bevorzugt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen findet sich in dem Handbuch "Epoxidverbindungen und Epoxidharze" von A.M.Paquin, Springer Verlag, Berlin 1958, Kapitel IV und in Lee, Neville, "Handbook of Epoxy Resins", Mc Graw-Hill Book Co., 1967, Chapter 2. Die genannten Epoxidverbindungen können einzeln oder im Gemisch eingesetzt werden.

Vorzugsweise wird das Epoxid-Polyäthylengylkol-Addukt durch Kondensation der genannten Polyätherpolyole (A) mit den Epoxidverbindungen (B) in Gegenwart geeigneter Katalysatoren bei 50 bis 200 °C, vorzugsweise bei 90 bis 170 °C, hergestellt, wobei das Verhältnis der Anzahl der OH-Gruppen der Komponente (A) zur Anzahl der Epoxidgruppen der Komponente (B) 1:3 bis 1:10, vorzugsweise 1 : 3,5 bis 1: 9, besonders bevorzugt 1:4 bis 1:8 und der spezifische Epoxidgruppen-Gehalt des Kondensationsproduktes bevorzugt 125 bis 6700 mmol/kg, bevorzugt 1000 bis 4000 mmol/kg (das Epoxidäquivalentgewicht 150 g/mol bis mindestens 8000 g/mol, bevorzugt 250 g/mol bis 1000 g/mol) beträgt.

Als Katalysatoren für die Darstellung des Adduktes aus den Komponenten (A) und (B) eignen sich starke anorganische und organische Basen, wie zum Beispiel Natriumhydroxid, Kaliumhydroxid, Lithiumhydroxid, Bariumhydroxid, Strontiumhydroxid, Alkalialkoholate wie Natriummethylat, Lithiummethylat, Natriumäthylat und Kaliumdodecylat sowie die Alkalisalze von Carbonsäuren, wie zum Beispiel Natrium- und Lithiumstearat. Ebenfalls geeignet sind starke anorganische und organische Protonsäuren, zum Beispiel Phosphorsäure, Tetrafluorborsäure und Benzolsulfonsäure. Ferner können als Katalysatoren Lewis-Säuren verwendet werden. Als Beispiele seien Zinn(IV)chlorid, Titan(IV)chlorid, Titan(IV)isopropylat, Triäthyloxoniumtetrafluoroborat sowie Bortrifluorid und seine Komplexe, zum Beispiel mit Phosphorsäure, Essigsäure (1:1 und 1:2), Methanol, Diäthyläther, Tetrahydrofuran, Phenol, Äthylenglykolmonoäthyläther, Polyäthylenglykol (molare Masse 200 g/mol), Dimethylsulfoxid, Di-n-butyläther, Di-n-hexyläther, Bernsteinsäure und aliphatischen, cycloaliphatischen und araliphatischen Aminen sowie Stickstoff-Heterocyclen genannt.

Bevorzugt werden als Katalysatoren $BF_3$-Diäthyläther, $BF_3$-Aminkomplexe und wäßrige Tetrafluorborsäure eingesetzt. Der Massenanteil an Katalysator beträgt im allgemeinen 0,1 bis 5, vorzugsweise 0,1 bis 1 %, bezogen auf die Masse des Reaktionsgemisches. Zur besseren Dosierung kann der Katalysator mit einem Lösungsmittel wie Diäthyläther, einem Glykol- oder cyclischen Äther, Ketonen und dergleichen verdünnt werden.

Zur Herstellung des Adduktes erwärmt man die umzusetzenden Gemische aus Hydroxylgruppen und Epoxidgruppen enthaltenden Verbindungen bis zu der Temperatur, bei der die Kondensation mit ausreichender Geschwindigkeit d.h. in 30 min bis 5 Stunden, abläuft. Die Umsetzung verfolgt man zweckmäßig über die Abnahme des spezifischen Epoxidgruppen-Gehalts. Die Reaktion kann durch Kühlung unter die Reaktionstemperatur abgebrochen werden.

Für die vorliegende Erfindung ist es wesentlich, zur Erlangung einer Topfzeit- ("pot-life"-) Anzeige durch Viskositätsanstieg Gemische von Addukten von Polyäthylengylkolen bzw. Addukte von Gemischen von Polyäthylengylkolen einzusetzen, wobei eines eine höhere molare Masse als 4000 g/mol aufweist. Der Mittelwert der molaren Masse des Gemisches des Epoxid-Polyäthylengylkol-Adduktes kann durch Verwendung geeigneter Gemische der Polyäthylengylkole zur Umsetzung mit der Epoxidverbindung oder ihrer getrennt hergestellten Additionsprodukte gezielt eingestellt werden. Der zur Charakterisierung der Epoxidverbindungen verwendete spezifische Epoxidgruppen-Gehalt SEG gibt den massenbezogenen Stoffinengengehalt an Epoxidgruppen in der betreffenden Verbindung an. Sein Kehrwert ist der früher benutzte sogenannte "EV-Wert" oder das "Epoxid-Äquivalentgewicht", berechnet als Quotient aus der molaren Masse der Verbindung und der Anzahl der im Molekül vorhandenen Epoxidgruppen.

Die geeigneten **Polyamine (C)** sind aliphatische oder araliphatische Amine mit mindestens drei Amin-Wasserstoffatomen pro Molekül und 2 bis 15 Kohlenstoffatomen oder Polyiminoalkylendiamine, wie zum Beispiel: Äthylendiamin, Diäthylentriamin, Triäthylentetramin, Tetraäthylenpentamin, Pentaäthylenhexamin, Propylendiamin, Dipropylentriamin u.a., ferner 2,2,4- und/oder 2,4,4-Trimethylhexamethylendiamin, sowie deren Umsetzungsprodukte mit äthylenisch ungesättigten Monomeren, insbesondere Acrylnitril im Verhältnis 1 mol zu 1 mol, Bis-(3-aminopropyl)-amin, 1,4-Bis-(3'-aminopropyl)-piperazin, N,N-Bis(3-aminopropyl)-äthylendiamin, Neopentandiamin, 2-Methyl-1,5-pentandiamin, sowie dessen Umsetzungsprodukt mit Acrylnitril im Verhältnis 1 mol zu 1 mol, 1,3-Diaminopentan, Hexamethylendiamin u.a., sowie cycloaliphatische Amine wie 1,2- bzw. 1,3-Diaminocyclohexan, 1,4-Diamino-3,6-diäthylcyclohexan, 1,2-Diamino-4-äthylcyclohexan, 1,4-Diamino-3,6-diäthylcyclohexan, 1-Cyclohexyl-3,4-diaminocyclohexan, Isophorondiamin sowie dessen Umsetzungsprodukt mit Acrylnitril im Verhältnis 1 mol zu 1 mol, 4,4'-Diaminodicyclohexylmethan und -propan, 2,2-Bis(4-aminocyclohexyl)-methan und -propan, 3,3'-Dimethyl-4,4'-diaminodicyclohexylmethan, 3-Amino-1-cyclohexyl-aminopropan, 1,3-und 1,4-Bis-(aminomethyl)-cyclohexan sowie meta- oder para-Xylylendiamin sowie dessen Umsetzungsprodukt mit Acrylnitril im Verhältnis von 1 mol zu 1 mol bis 1 mol zu 2 mol. Die Amine können einzeln oder im Gemisch eingesetzt werden. Zur Charakterisierung der Amine kann der spezifische Amin-Wasserstoff-Gehalt (SAWG) herangezogen werden, der als der massenbezogene Stoffinengengehalt an Aminwasserstoffatomen definiert ist. Sein Kehrwert ist das früher benutzte sogenannte "Aminwasserstoff-Äquivalent", das der Quotient ist aus der molaren Masse der betreffenden Verbindung und der Anzahl ihrer Amin-Wasserstoffatome.

Die Umsetzung der Mischung (AB) der Epoxid-Polyäthylengylkole-Addukte (A1B) und (A2B) mit Aminen (C) erfolgt in der Weise, daß die Mischung (AB) der Addukte zu dem Reaktionspartner (C) hinzugefügt wird, bei einer Temperatur im Bereich von 20 bis 150 °C, vorzugsweise im Bereich zwischen 40 bis 90 °C, und in diesen Temperaturbereich belassen wird, bis ein vollständiger Umsatz der Epoxidgruppen mit den Aminogruppen stattgefunden hat.

Anschließend können einfach ungesättigte Verbindungen (äthylenisch ungesättigte Monomere) zugesetzt werden, die mit den verbleibenden primären und/oder sekundären Aminogruppen reagieren. Dafür werden bevorzugt Amide und Ester der Acryl- und Methacrylsäure mit Alkoholen mit 1 bis 8 Kohlenstoffatomen, wie zum Beispiel Äthyl-, Hexyl- und 2-Äthylhexylacrylat, Methyl-, Propyl- und iso-Butyl-methacrylat, oder die Amide dieser Säuren, sowie Acrylnitril und Methacrylnitril einzeln oder im Gemisch. Bevorzugt wird Acrylsäure-tert.butylester und Acrylnitril. Die Modifizierung findet durch Zugabe der ungesättigten Verbindung zum Additionsprodukt (ABC) bei 20 bis 100 °C statt, wobei als Verhältnis der Stoffmenge der Amin-Wasserstoffatome zur Stoffmenge der ungesättigten Verbindung 2,0 mol zu 1,0 mol bis 100 mol zu 1,0 mol gewählt wird. Die Modifizierung mit der ungesättigten Verbindung kann wahlweise auch bereits an den Polyaminen (C) vorgenommen werden.

Danach ist der erfindungsgemäße Härter gebrauchsfertig. Er kann entweder in der vorliegenden Form oder in Wasser emulgiert eingesetzt werden. Als Reaktionspartner dieser Härter eignen sich flüssige Epoxidharze, wasseremulgierbare Epoxidharze oder Epoxid-Festharz-Dispersionen, wobei die Härtermenge so gewählt wird, daß das Verhältnis der Stoffmenge der Aminwasserstoff-Atome im erfindungsgemäßen Härter zur Stoffmenge der Epoxidgruppen des als Reaktionspartner gewählten Harzes von 1 : 0,75 bis 1 : 2,0 ist.

Die erfindungsgemäßen **Härter** finden in Kombination mit geeigneten Epoxidharzen **Anwendung** vor allem als Schutzanstrich für mineralische Untergründe, d.h. auf Putz, Beton, Mauerwerk, Zement. Beschichtet werden beispielsweise Wände, Decken und Böden in Garagen, Großküchen, Krankenhäusern, Molkereien, Badeanstalten, Tunnelanlagen und Kernkraftwerken. Bei entsprechender Formulierung können die erfindungsgemäßen Systeme auch als Korrosionsschutzprimer auf Stahluntergründen verwendet werden. Auch der Einsatz als hochglänzende Klarlacke für die verschiedensten Substrate, wie z.B. Holz, ist möglich.

Aufgrund ihrer hervorragenden technologischen Eigenschaften, beispielsweise hinsichtlich Haftung, sehr hohe Härte, Korrosionsschutzwirkung, Wasser- und Chemikalienbeständigkeit u.a., eignen sich die erfindungsgemäß gewonnenen Härter in Kombination mit Festharz-Dispersionen zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutz- und/oder Dekorbeschichtungen auf den unterschiedlichsten, insbesondere rauhen und porösen Substraten, wie z.B. Holz, mineralischen Untergründen (z.B. Beton und Stein), Glas, Kunststoffen (z.B. Polyäthylen, Polypropylen usw.), Kompositwerkstoffen, Keramik und vorbehandelten oder nicht vorbehandelten Metallen verwendet werden.

Die folgenden Beispiele sollen die Erfindung repräsentieren, ohne durch ihre Auswahl einschränkend zu wirken:

**BEISPIELE:**

**I. polyol-Epoxid-Addukte auf Basis Polyäthylenglykol**

**I.1 Allgemeine Arbeitsvorschrift:**

181 g ®Beckopox EP 140 (Bisphenol-A-diglycidyläther mit spezifischem Epoxidgruppen-Gehalt von 5525 mmol/kg (EV-Wert 181 g/mol, Vianova Resins GmbH)) als Komponente (B) wird mit der entsprechenden Menge Polyäthylenglykol (s. Tabelle 1) als Komponente (A) in einer Stickstoffatmosphäre auf 125 °C geheizt. Unter gutem Rühren gibt man 1,5 g eines BF$_3$-Aminkomplexes als Katalysator zu (®Anchor 1040 der Firma Air Products) und erhöht die Temperatur kontinuierlich auf 150 °C. Der spezifische Epoxidgruppen-Gehalt sinkt dabei etwas unter den theoretischen Wert.

**1.2 Tabelle 1, Polyol-Epoxid-Addukte auf Basis Bisphenol A-Diglycidyläther**

| | $M_w$ PEG | n(EP)/ n (OH) | EV th. | SEG th. | EV Abbr. | SEG Abbr. | Temp. Abbr. | Dauer |
|---|---|---|---|---|---|---|---|---|
| Beispiel | g/mol | | g/mol | mmol/kg | g/mol | mmol/kg | °C | h |
| Add-1 | 4.000 | 4,4 | 831 | 1203 | 990 | 1010 | 155 | 4 |
| Add-2 | 6.000 | 3,0 | 1.775 | 563 | 2.093 | 478 | 150 | 2,5 |
| Add-3 | 8.000 | 3,0 | 1.425 | 702 | 1.714 | 583 | 160 | 3 |
| Add-4 | 8.000 | 4,4 | 1.112 | 899 | 1.324 | 755 | 155 | 2 |
| Add-V | 1.000 | 4.3 | 385 | 2597 | 420 | 2381 | 160 | 3 |

PEG: Polyäthylenglykol
n(EP) Stoffmenge Epoxidgruppen
n(OH) Stoffmenge Hydroxylgruppen
n(EP)/n(OH) Verhältnis der Stoffmengen (oder Anzahl der) Epoxidgruppen und Hydroxylgruppen
EV: "Epoxidäquivalentgewicht"
$M_w$: gewichtsmittlere molare Masse
Add-V: Vergleichsbeispiel
th. theoretisch
Abbr. bei Abbruch

Formel für theoretischen SEG:

$$SEG = \frac{2 * [\, n(EP) \,/\, n(OH)\,]\, -1}{M_w(PEG) + 2* [\, n\,(EP)\, /\, n\,(OH)\,]\, * 181}$$

**II. Epoxidhärter**

Die folgenden Beispiele zeigen, wie durch Zugabe geringer Mengen von epoxyfunktionellen Polyol-Epoxid-Addukten auf Basis hochmolekularer Polyäthylenglykole zu einem Polyol-Epoxid-Addukt aufBasis niedermolekularer Polyäthylenglykole und anschließender Umsetzung mit monomeren Polyaminen wasserverdünnbare Härtungsmittel mit Topfzeit-Anzeige gewonnen werden können:

**II.1 Zusammensetzung der Härter**

1,3-Bis-(aminomethyl)-benzol und Isophorondiamin (Mengen siehe Tabelle 2) werden bei 40 °C vorgelegt. Die Polyol-Epoxid-Addukt- Mischung (Menge und Zusammensetzung siehe Tabelle 2) gibt man in der Weise hinzu, daß eine Temperatur von 80 °C in der nun eintretenden exothermen Reaktion nicht überschritten wird. Anschließend wird die Mischung solange auf 80 °C gehalten, bis die Epoxidgruppen vollständig umgesetzt sind (etwa vier Stunden). Zur Verfolgung des Umsatzes werden die Aminzahl (Masse an KOH in mg, die genausoviel Säure zur Neutralisation bindet wie 1 g der betreffenden Substanz, bezogen auf die Masse der Substanz in g) und eine scheinbare Aminzahl (Titration mit und ohne Zusatz von Tetrabutylammoniumbromid) nach DIN 16 945 gemessen. Die Proben werden in einer Mischung von gleichen Volumenteilen Eisessig/Aceton gelöst und mit 0,1 n Perchlorsäure, gelöst in Eisessig, titriert. Die Reaktion ist beendet; wenn

$$AZ(mit) = AZ(ohne)$$

ist,
wobei
AZ(mit) bedeutet: Titration mit einem Überschuß an Tetrabutylammoniumbromid

AZ(ohne) bedeutet: Titration ohne Tetrabutylammoniumbromid.

Anschließend wird mit deionisiertem Wasser auf 80 % verdünnt.

**11.2 Tabelle 2, Epoxidharz-Härter**

| Nummer | Polyol-Epoxid-Addukt 1 | | Polyol-Epoxid-Addukt 2 | | mXDA | IPDA | AZ | η |
|---|---|---|---|---|---|---|---|---|
| | Typ | Teile | Typ | Teile | Teile | Teile | mg/g | Pa·s |
| H-1 | Add-V | 557 | Add-1 | 983 | 173 | 216 | 244 | 16,0 |
| H-2 | Add-V | 590 | Add-2 | 66 | 173 | 216 | 238 | 20,1 |
| H-3 | Add-V | 557 | Add-3 | 983 | 173 | 216 | 239 | 17,5 |
| H-4 | Add-V | 557 | Add-4 | 983 | 173 | 216 | 250 | 15,9 |
| H-V | Add-V | 655 | - | - | 173 | 216 | 230 | 19,4 |

mXDA    1,3-Bis-(aminomethyl)-benzol IPDA Isophorondiamin AZ    Aminzahl in mg/g der 80%igen Lösung in Wasser η    Viskosität der 80%igen Lösung in Wasser angegeben in Pa·s nach ISO 3219, 23 °C, Scherrate 25 s$^{-1}$

H-V:    Vergleichsbeispiel, Härter ®Beckopox EH 613 (Vianova Resins GmbH, Epoxid-Amin-Addukt auf Basis einer Mischung von Isophorondiamin und m-Xylylen diamin)

**II.3 Anwendungstechnische Ausprüfung**

Die erfindungsgemäßen Härter H-1 bis H-4 werden mit einem Vergleichsbeispiel H-V einmal mit einer intern flexibilisierten Epoxid-Festharz-Dispersion,

®Beckopox EP 385w,

und zum anderen mit einem selbstemulgierbaren Epoxid-Flüssigharz,

®Beckopox EP 147w,

als Klarlack formuliert. Es wird in beiden Fällen eine stöchiometrische Vernetzung gewählt. In der Kombination mit ®Beckopox EP 147w wird die Gesamtmischung mit Wasser auf Spritzviskosität (Auslaufzeit im DIN-4-Becher: 20 bis 40 s) eingestellt.

Die erfindungsgemäßen Härter weisen wie der Vergleich eine kurze Trocknungszeit (staubtrocken), gute Wasserfestigkeit und hohe Anfangshärte auf Durchwegs guter Verlauf und einwandfreie Filmbeschaffenheit runden das gute Eigenschaftsbild ab. Aber nur die Härter auf Basis von Polyol-Epoxid-Addukten mit hochmolekularen Polyäthylenlyglykolen zeigen einen deutlichen Viskositätsanstieg (mindestens Verdreifachung der Viskosität bis zur völligen Gelation) bis zum Ende der Gebrauchsdauer an.

Erläuterung der Prüfungsbedingungen:

1. Staubtrocken: Auf den Film gestreute Glasperlen lassen sich nach der Aushärtung nicht mehr mit einem Pinsel entfernen.

2. Klebfrei: Die Glasperlen lassen sich nach der Aushärtung mit einem Pinsel entfernen.

3. Pendelhärte nach König: DIN 53 157.

4. Filmtrübung: Nach dem Mischen von Härter und Dispersion werden halbstündlich Filme mit einer Naßfilmdicke von 200 um aufgezogen. Das Auftreten einer Trübung im Film nach Aushärtung zeigt das Ende der Verarbeitungszeit an und wird als Prüfergebnis eingetragen.

5. Wasserbeständigkeit nach 24 h, Lagerung bei Raumtemperatur: Auf Glasplatten mit 200 μm Naßfilmdicke aufgezogene Filme werden nach 24 h Lagerung in Wasser bei Raumtemperatur geprüft.

Klarlacke auf Basis von ®Beckopox EP 147w und den Härtern nach Beispiel H-1 bis H-4 und des Vergleichs H-V wurden auf Spritzviskosität (Auslaufzeit im DIN-4-Becher: 20 bis 40 s) eingestellt und sowohl Glanz als auch Viskosität als Funktion der Zeit gemessen:

Bei den erfindungsgemäßen Härtern H-1 bis H-4 trat bis zum ersten beobachtbaren Glanzabfall der Filme eine Verdreifachung bis Vervierfachung der Viskosität auf, nach 24 Stunden war der Lack vollständig geliert, beim Härter H-V hingegen findet kein signifikanter Anstieg der Viskosität statt, im Gegenteil, die Viskosität sinkt auf die Hälfte des ursprünglichen Wertes.

Somit zeigen die erfindungsgemäßen Flüssigharze auch unter unter praxisnahen Bedingungen eine den konventionellen Systemen vergleichbare pot-life-Anzeige.

### II.3.1 Mit Beckopox EP 385w

Es handelt sich um eine intern flexibilisierte Epoxid-Festharzddispersion, 56 % in Wasser, spezifischer Epoxidgruppen-Gehalt ca. 1961 mmol/kg (Epoxid-Äquivalentgewicht ca. 510 g/mol, Vianova Resins GmbH).

| | | Erfindungsgemäße Härter | | | | Vergleich |
|---|---|---|---|---|---|---|
| Härter | | H-1 | H-2 | H-3 | H-4 | H-V |
| Masse Harz 56 %ig | g | 100 | 100 | 100 | 100 | 100 |
| Masse Härter 40%ig | g | 31,2 | 31,7 | 30,4 | 30,6 | 31,9 |
| Viskosität nach Mischen | # | 420 | 364 | 350 | 302 | 712 |
| Verarbeitungszeit nach Glanz | h:min | 1:30 | 1:30 | 2 : 30 | 2 : 30 | 1:30 |
| Viskosität am Ende der Verarbeitungszeit | # | 2.160 | 3.584 | 3.690 | 2.095 | 971 |
| Trocknung staubtr. | h:min | 1:00 | 1:15 | 1 : 20 | 1 : 15 | 0:50 |
| Trocknung klebfrei | h:min | 5:15 | 6:30 | 7 : 30 | 7 : 30 | 5:00 |
| Verlauf | * | 1 | 1 | 1 | 1 | 1 |
| Filmtransparenz | * | 0 - 1 | 0 - 1 | 0 - 1 | 0 - 1 | 1 |
| Oberflächenkleber | * | 0 | 0 | 0 | 0 | 0 |
| Pendelhärte n. 1 d | s | 60 | 67 | 45 | 50 | 60 |
| Pendelhärte n. 2 d | s | 88 | 97 | 64 | 70 | 93 |
| Pendelhärte n. 7 d | s | 122 | 136 | 105 | 107 | 122 |
| Wasserfestigkeit nach 24 h | * | 2 | 2 - 3 | 2 - 3 | 2 - 3 | 2 |
| Heißwasserfestigkeit nach 7 d | * | 3 - 4 | 3 | 3 | 3 | 3 - 4 |
| Pendelhärte nach Wasserfestigkeitstest | s | 81 | 87 | 97 | 66 | 107 |
| Pendelhärte im Dampfraum | s | 80 | 97 | 69 | 67 | 80 |
| * Skala: 0 = exzellent bis 5 = schlecht, Prüfbedingungen: 22 °C und 45 % relative Luftfeuchtigkeit $\#$ Viskosität in mPa·s, gemessen nach ISO 3219, 25 °C, Scherrate 25 s$^{-1}$ | | | | | | |

### II.3.2 Mit Beckopox EP 147w

Es handelt sich um ein selbstemulgierendes Epoxid-Flüssigharz, 100 %, spezifischer Epoxidgruppen-Gehalt ca. 5260 mmol/kg (Epoxid-Äquivalentgewicht ca. 190 g/mol, Vianova Resins GmbH).

| | | Erfindungsgemäße Härter | | | | Vergleich |
|---|---|---|---|---|---|---|
| | | H-1 | H-2 | H-3 | H-4 | H-V |
| Masse Harz 70%ig | g | 50 | 50 | 50 | 50 | 50 |
| Masse Härter 40%ig | g | 52,5 | 53,4 | 51,2 | 51,5 | 53,7 |
| vollentsalztes Wasser | g | 37 | 25 | 31 | 32 | 25 |
| Viskosität nach Mischen | # | 37 | 39 | 35 | 37 | 25 |
| Verarbeitungszeit nach Glanz | h:min | 1:00 | 0:50 | 1:30 | 1:20 | 1:30 |

(fortgesetzt)

|  |  | Erfindungsgemäße Härter |  |  |  | Vergleich |
|---|---|---|---|---|---|---|
|  |  | H-1 | H-2 | H-3 | H-4 | H-V |
| Viskosität am Ende der Verarbeitungszeit | # | 210 | 150 | 130 | 170 | 12 |
| Trocknung staubtr. | h:min | 4:00 | 3:15 | 3:30 | 3:30 | ·2:50 |
| Trocknung klebfrei | h:min | >8:00 <24:00 | > 8:00 <24:00 | > 8:00 <24:00 | > 8:00 <24:00 | > 8:00 <24:00 |
| Verlauf | * | 2-3 | 2-3 | 2-3 | 2-3 | 2-3 |
| Filmtransparenz | * | 0 | 0 | 0-1 | 0-1 | 0 |
| Oberflächenkleber | * | 0 | 0 | 0 | 0 | 0 |
| Pendelhärte n. 1 d | s | 93 | 101 | 91 | 121 | 115 |
| Pendelhärte n. 2 d | s | 131 | 146 | 138 | 170 | 159 |
| Pendelhärte n. 7 d | s | 189 | 177 | 191 | 197 | 194 |
| Wasserfestigkeit nach 24 h | * | 1 | 1 | 2 | 0 | 0 - 1 |
| Heißwasserfestigkeit nach 7 d | * | 1 | 0 - 1 | 2 - 3 | 0 - 1 | 0 |
| Pendelhärte nach Wasserfestigkeitstest | s | 101 | 134 | 94 | 117 | 91 |
| Pendelhärte im Dampfraum | s | 138 | 152 | 134 | 197 | 152 |
| * Skala: 0 = exzellent bis 5 = schlecht, Prüfbedingungen: 21 °C und 43 % relative Luftfeuchtigkeit # Viskosität: Auslaufzeit im DIN-4-Becher nach Meßmethode DIN 53 211 | | | | | | |

**Patentansprüche**

1. Wasserdispergierbare Härtungsmittel für Epoxidharze, die in Mischung mit Epoxidharzen das Ende der Verarbeitungszeit durch einen deutlichen Viskositätsanstieg zeigen, enthaltend Umsetzungsprodukte (ABC) von Addukten (AB) aus

(A) Polyäfhylenglykolen mit einer gewichtsmittleren molaren Masse $M_w$ von 200 bis 20.000 g/mol und

(B) mindestens einer Epoxidverbindung mit mindestens zwei Epoxidgruppen pro Molekül und einem spezifischen Epoxidgruppen-Gehalt von 500 bis 10 000 mmol/kg, mit

(C) Polyaminen mit mindestens drei Aminwasserstoffatomen und mindestens einer primären Aminogruppe pro Molekül, mit gegebenenfalls anschließender chemischer Modifizierung der Umsetzungsprodukte (ABC),

wobei die Komponente (AB) in der ersten Ausführungsform eine Mischung enthält von

(i) Addukten (A2B) von Epoxidverbindungen (B) mit Polyäthylenglykolen (A2) mit einer gewichtsmittleren molaren Masse $M_w$ des Polyäthylenglykols von mindestens 4.000 g/mol und Addukten (A1B) von Epoxidverbindungen (B) mit Polyäthylenglykolen (A1) mit einer gewichtsmittleren molaren Masse $M_w$ des Polyäthylenglykols von 500 bis 2500 g/mol, wobei die Addukte (A2B) in einem Massenanteil von 10 bis 75 % und die Addukte (A1B) in einem Massenanteil von 25 bis 90 %, bezogen auf die Masse der Mischung, in dieser enthalten sind,

oder wobei die Komponente (AB) in der zweiten Ausführungsform

(ii) Addukte enthält einer Mischung (A) von Polyäthylenglykolen (A2) mit einer gewichtsmittleren molaren Masse $M_w$ von mindestens 4000 g/mol und Polyäthylenglykolen (A1) mit einer gewichtsmittleren molaren Masse $M_w$ von 500 bis 2500 g/mol mit Epoxidverbindungen (B), wobei die Polyäthylenglykole (A2) in einem Massenanteil von 15 bis 80 %, und die Polyäthylenglykole (A1) in einem Massenanteil von 20 bis 85 % bezogen auf die Masse der Mischung in dieser enthalten sind, und

wobei bei der Synthese der Addukte (AB) bzw. (A1B) und (A2B) das Verhältnis der Anzahl der Hydroxylgruppen der Komponente (A) bzw. (A1) und (A2) zur Anzahl der Epoxid-Gruppen der Komponente (B) jeweils 1 : 3 bis 1 : 10 beträgt, und das Verhältnis der Anzahl der verbleibenden Epoxidgruppen in den Epoxid-Polyäthylenglykol-Addukten (AB) zur Anzahl der Amin-Wasserstoffatome in den Polyaminen (C) 1:1,5 bis 1: 100 beträgt.

2. Wasserdispergierbare Härtungsmittel für Epoxidharze nach Anspruch 1, **dadurch gekennzeichnet, daß** die gewichtsmittlere molare Masse des Polyäthylenglykols (A1) 700 bis 2500 g/mol beträgt.

3. Wasserdispergierbare Härtungsmittel für Epoxidharze nach Anspruch 1, **dadurch gekennzeichnet, daß** die Hydroxylzahl der Polyäthylenglykolkomponenten (A1) und (A2) jeweils 5 bis 600 mg/g beträgt.

4. Wasserdispergierbare Härtungsmittel für Epoxidharze nach Anspruch 1, **dadurch gekennzeichnet, daß** die Epoxidkomponente (B) ausgewählt ist aus Diglycidyläthem von zweiwertigen Alkoholen mit 4 bis 10 Kohlenstoffatomen, Polyoxyalkylenglykolen mit 4 bis 80 Kohlenstoffatomen, zweiwertigen Phenolen mit 6 bis 20 Kohlenstoffatomen und Novolaken.

5. Wasserdispergierbare Härtungsmittel für Epoxidharze nach Anspruch 1, **dadurch gekennzeichnet, daß** die Komponente (C) ausgewählt ist aus aliphatischen diprimären Diaminen mit 2 bis 15 Kohlenstoffatomen und Polyiminoalkylen-diaminen.

6. Wasserdispergierbare Härtungsmittel für Epoxidharze nach Anspruch 1, **dadurch gekennzeichnet, daß** die Polyamine der Komponente (C) vor oder nach der Reaktion mit den Epoxid-Polyäthylenglykol-Addukten (AB) mit äthylenisch ungesättigten Monomeren umgesetzt werden ausgewählt aus Estern der Acryl- und Methacrylsäure und Alkoholen mit 1 bis 8 Kohlenstoffatomen, Amiden dieser Säuren sowie Methacrylnitril und Acrylnitril.

7. Verfahren zur Herstellung von wasserdispergierbaren Härtungsmitteln für Epoxidharze nach Anspruch 1, **dadurch gekennzeichnet, daß** in in der ersten Stufe Polyäthylenglykol-Epoxid-Addukte aus den Komponenten (A1) bzw. (A2) und (B) erzeugt werden, diese Addukte gemischt werden, und diese Mischung (AB) in der zweiten Stufe mit einem Polyamin (C) umgesetzt wird.

8. Verfahren zur Herstellung von wasserdispergierbaren Härtungsmitteln für Epoxidharze nach Anspruch 1, **dadurch gekennzeichnet, daß** in in der ersten Stufe ein Polyäthylenglykol-Epoxid-Addukt (AB) aus einer Mischung der Komponenten (A1) und (A2) mit (B) erzeugt wird, und diese Komponente (AB) in der zweiten Stufe mit einem Polyamin (C) umgesetzt wird.

9. Verfahren nach Anspruch 7, **dadurch gekennzeichnet, daß** das Polyamin (C) vor der Umsetzung mit der Polyäthylenglykol-Epoxid-Addukt-Mischung (AB) mit äthylenisch ungesättigten Monomeren chemisch modifiziert wird.

10. Verwendung der wasserdispergierbaren Härtungsmittel für Epoxidharze nach Anspruch 1 zur Herstellung von Zwei-Komponenten-Beschichtungsmitteln, die das Ende der Verarbeitungszeit durch einen Viskositätsanstieg anzeigen.

**Claims**

1. A water-dispersible curing agent for epoxy resins which, as a mixture with epoxy resins, shows the end of the processing time by a clear increase in viscosity, comprising reaction products (ABC) of adducts (AB) of

    (A) polyethylene glycols having a weight-average molar mass $M_w$ of 200 to 20,000 g/mol and

    (B) at least one epoxide compound having at least two epoxide groups per molecule and a specific epoxide group content of 500 to 10,000 mmol/kg, with

(C) polyamines having at least three amine hydrogen atoms and at least one primary amino group per molecule, with optionally subsequent chemical modification of the reaction products (ABC),

component (AB) in the first embodiment comprising a mixture of

(i) adducts (A2B) of epoxide compounds (B) with polyethylene glycols (A2) having a weight-average molar mass $M_w$ of the polyethylene glycol of at least 4000 g/mol and adducts (A1B) of epoxide compounds (B) with polyethylene glycols (A1) having a weight-average molar mass $M_w$ of the polyethylene glycol of 500 to 2500 g/mol, the adducts (A2B) being present in the mixture in a mass fraction of 10 to 75% and the adducts (A1B) being present in the mixture in a mass fraction of 25 to 90%, based on the mass of the mixture,

or component (AB) in the second embodiment comprising

(ii) adducts of a mixture (A) of polyethylene glycols (A2) having a weight-average molar mass $M_w$ of at least 4000 g/mol and polyethylene glycols (A1) having a weight-average molar mass $M_w$ of 500 to 2500 g/mol with epoxide compounds (B), the polyethylene glycols (A2) being present in the mixture in a mass fraction of 15 to 80% and the polyethylene glycols (A1) being present in the mixture in a mass fraction of 20 to 85%, based on the mass of the mixture, and

during the synthesis of adducts (AB) or (A1B) and (A2B), the ratio of the number of hydroxyl groups of component (A) or (A1) and (A2) to the number of epoxide groups of component (B) being 1:3 to 1:10 in each case, and the ratio of the number of remaining epoxide groups in the epoxide-polyethylene glycol adducts (AB) to the number of amine hydrogen atoms in polyamines (C) being 1:1.5 to 1:100.

2. The water-dispersible curing agent for epoxy resins as claimed in claim 1, wherein the weight-average molar mass of polyethylene glycol (A1) is 500 to 2500 g/mol.

3. The water-dispersible curing agent for epoxy resins as claimed in claim 1, wherein the hydroxyl number of polyethylene glycol components (A1) and (A2) is 5 to 600 mg/g in each case.

4. The water-dispersible curing agent for epoxy resins as claimed in claim 1, wherein epoxide component (B) is chosen from diglycidyl ethers of dihydric alcohols having 4 to 10 carbon atoms, polyoxyalkylene glycols having 4 to 80 carbon atoms, dihydric phenols having 6 to 20 carbon atoms and novolaks.

5. The water-dispersible curing agent for epoxy resins as claimed in claim 1, wherein component (C) is chosen from aliphatic diprimary diamines having 2 to 15 carbon atoms and polyiminoalkylene-diamines.

6. The water-dispersible curing agent for epoxy resins as claimed in claim 1, wherein, before or after the reaction with the epoxide-polyethylene glycol adducts (AB), the polyamines of component (C) are reacted with ethylenically unsaturated monomers chosen from esters of acrylic and methacrylic acid and alcohols having 1 to 8 carbon atoms, amides of these acids and methacrylonitrile and acrylonitrile.

7. A process for the preparation of a water-dispersible curing agent for epoxy resins as claimed in claim 1, which comprises producing polyethylene glycol-epoxide adducts from components (A1) or (A2) and (B) in the first stage, mixing these adducts and reacting this mixture (AB) with a polyamine (C) in the second stage.

8. A process for the preparation of a water-dispersable curing agent for epoxy resins as claimed in claim 1, which comprises producing a polyethylene glycol-epoxide adduct (AB) from a mixture of components (A1) and (A2) and (B) in the first stage and reacting this component (AB) with a polyamine (C) in the second stage.

9. The process as claimed in claim 7, wherein polyamine (C) is modified chemically with ethylenically unsaturated monomers before the reaction with the polyethylene glycol-epoxide adduct mixture (AB) .

10. The use of a water-dispersible curing agent for epoxy resins as claimed in claim 1 for the preparation of two-component coating compositions which indicate the end of the processing time by an increase in viscosity.

**Revendications**

1. Durcisseurs dispersibles à l'eau pour résines époxyde qui, en mélange avec des résines époxyde, indiquent la fin du temps de transformation par une augmentation significative de viscosité, contenant les produits de réactions (ABC) des adduits (AB) constitués de

   (A) des polyéthylèneglycols avec une masse molaire moyenne en masse $M_w$ de 200 à 20 000 g/mol et
   (B) au moins un composé époxyde avec au moins deux groupes époxyde par molécule et une teneur spécifique en groupes époxyde de 500 à 10 000 mmol/kg, avec
   (C) des polyamines avec au moins deux atomes d'hydrogène en position amine et au moins un groupe amino primaire par molécule, avec éventuellement ensuite une modification chimique des produits de réaction (ABC),

   dans lesquels le composant (AB) dans la première forme de réalisation contient un mélange

   (i) d'adduits (A2B) de composés époxyde (B) avec des polyéthylèneglycols (A2) avec une masse molaire moyenne en masse $M_w$ du polyéthylèneglycol d'au moins 4 000 g/mol et d'adduits (A1B) de composés époxyde (B) avec des polyéthylèneglycols (A1) avec une masse molaire moyenne en masse $M_w$ du polyéthylèneglycol de 500 à 2500 g/mol, les adduits (A2B) étant contenus dans celui-ci en une proportion en masse de 10 à 75 % et les adduits (A1B) en une proportion en masse de 25 à 90 %, par rapport à la masse du mélange,
   ou dans lesquels le composant (AB) dans la deuxième forme de réalisation
   (ii) contient des adduits d'un mélange (A) de polyéthylèneglycols (A2) avec une masse molaire moyenne en masse $M_w$ d'au moins 4000 g/mol et de polyéthylèneglycols (A1) avec une masse molaire moyenne en masse $M_w$ de 500 à 2500 g/mol avec des composés époxyde (B), les polyéthylèneglycols (A2) étant contenus dans ceux-ci en une proportion en masse de 15 à 80 % et les polyéthylèneglycols (A1) en une proportion en masse de 20 à 85 % par rapport à la masse du mélange, et

   dans lesquels lors de la synthèse des adduits (AB) ou (A1B) et (A2B) le rapport du nombre de groupes hydroxyle du composant (A) ou (A1) et (A2) par rapport au nombre de groupes époxyde du composant (B) s'élève respectivement à entre 1 : 3 et 1 : 10, et le rapport du nombre de groupes époxyde restants dans les adduits époxyde-polyéthylèneglycol (AB) par rapport au nombre des atomes d'hydrogène en position amine dans les polyamines (C) s'élève à entre 1 : 1,5 et 1 : 100.

2. Durcisseurs dispersibles à l'eau pour résines époxyde selon la revendication 1, **caractérisés en ce que** la masse molaire moyenne en masse du polyéthylèneglycol (A1) s'élève à entre 700 et 2500 g/mol.

3. Durcisseurs dispersibles à l'eau pour résines époxyde selon la revendication 1, **caractérisés en ce que** l'indice d'hydroxyle des composants polyéthylèneglycol (A1) et (A2) est respectivement de 5 à 600 mg/g.

4. Durcisseurs dispersibles à l'eau pour résines époxyde selon la revendication 1, **caractérisés en ce que** le composant époxyde (B) est choisi parmi les diglycicyléthers d'alcools divalents avec de 4 à 10 atomes de carbone, les polyoxyalkylèneglycols avec de 4 à 80 atomes de carbone, les phénols divalents avec de 6 à 20 atomes de carbone et les novolaques.

5. Durcisseurs dispersibles à l'eau pour résines époxyde selon la revendication 1, **caractérisés en ce que** le composant (C) est choisi parmi les diamines aliphatiques diprimaires avec de 2 à 15 atomes de carbone et les polyiminoalkylènediamines.

6. Durcisseurs dispersibles à l'eau pour résines époxyde selon la revendication 1, **caractérisés en ce que** les polyamines du composant (C) sont mis à réagir avant
   ou après la réaction avec les adduits époxyde-polyéthylèneglycol (AB) avec des monomères éthyléniquement insaturés choisis parmi les esters de l'acide acrylique et méthacrylique et les alcools avec de 1 à 8 atomes de carbone, les amides de ces acides ainsi que le méthacrylonitrile et l'acrylonitrile.

7. Procédé pour la préparation de durcisseurs dispersibles à l'eau pour des résines époxyde selon la revendication 1, **caractérisé en ce que** dans la première étape on produit des adduits de polyéthylèneglycol et d'époxyde à partir des composants (A1) ou (A2) et (B), on mélange ces adduits et on met à réagir ce mélange (AB) dans la deuxième étape avec une polyamine (C).

**8.** Procédé pour la préparation de durcisseurs dispersibles à l'eau pour résines époxyde selon la revendication 1, **caractérisé en ce que** dans la première étape on produit un adduit de polyéthylèneglycol et d'époxyde (AB) à partir d'un mélange des composants (A1) et (A2) avec (B), et on met à réagir ce composant (AB) avec une polyamine (C).

**9.** Procédé selon la revendication 7, **caractérisé en ce que** la polyamine (C) est modifiée chimiquement avant la réaction avec le mélange de l'adduit de polyéthylèneglycol et d'époxyde (AB) avec des monomères éthyléniquement insaturés.

**10.** Utilisation des durcisseurs dispersibles à l'eau pour résines époxyde selon la revendication 1 pour la préparation d'agents de revêtement à deux composants, qui indiquent la fin du temps de transformation par une augmentation de viscosité.